# FASCICULE DE BREVET EUROPEEN

(11) **EP 1 679 807 B1**
(45) Date de publication et mention de la délivrance du brevet: **19.03.2008**
(21) Numéro de dépôt: 06290031.1
(22) Date de dépôt: 06.01.2006
(51) Int. Cl.: H04B 7/22

(54) **Terminal communicant et dispositif d'annulation d'au moins un signal électromagnétique sur un récepteur**
Kommunikationsgerät und Vorrichtung in einem Empfänger zur Unterdrückung von mindestens einem elektromagnetischen Signal
Communication terminal and means for cancelling at least one electromagnetic signal in a receiver

(30) Priorité: 07.01.2005 FR 0500165
(43) Date de publication de la demande: 12.07.2006
(73) Titulaire: Sagem Communication, 95801 Cergy-St Christophe (FR)
(72) Inventeur: Danet, Olivier, 95520 Osny (FR)
(74) Mandataire: Debay, Yves

(56) Documents cités:
- EP-A- 1 182 788
- US-A- 4 584 580
- PATENT ABSTRACTS OF JAPAN vol. 1999, no. 04, 30 avril 1999 (1999-04-30) & JP 11 017635 A (MATSUSHITA ELECTRIC IND CO LTD), 22 janvier 1999 (1999-01-22)
- PATENT ABSTRACTS OF JAPAN vol. 008, no. 261 (E-281), 30 novembre 1984 (1984-11-30) & JP 59 131233 A (NIPPON DENKI KK), 28 juillet 1984 (1984-07-28)

## Description

La présente invention concerne le domaine de l'électronique et plus particulièrement de la téléphonie mobile multi standard.

Les téléphones mobiles actuels sont des terminaux communicants capables de fonctionner, selon différents standards, avec des signaux transmis grâce à différentes bandes de fréquences de télécommunication. La norme GSM (Système Global de communication Mobile ou « Global System for Mobile communication », selon la terminologie anglaise) utilisait initialement une bande de fréquences centrée sur environ 900 Méga Hertz (MHz). La variante européenne de la technologie GSM, appelée le DCS (Système de Communication Digitale ou « Digital Communication System », selon la terminologie anglaise), fonctionne sur une bande centrée sur environ 1800MHz. La variante américaine de la technologie GSM, appelée le PCS (Service de Communications Personnelles ou « Personal Communications Service », selon la terminologie anglaise) utilise une bande de fréquences centrée sur environ 1900MHz.

De plus, grâce à la technologie TDMA (« Time Division Multiple Access », selon la terminologie anglaise), une même fréquence peut être utilisée pour plusieurs communications en même temps. Cette technologie consiste à séquencer l'émission d'une même fréquence en des intervalles de temps (périodes) attribués aux différentes communications. Ainsi, pendant une communication, les signaux GSM codés en modulation de fréquence sont transmis au cours de périodes actives (ou « bursts », selon la terminologie anglaise) d'une durée de 577 microsecondes (µs) et séparées entre elles par des périodes inactives d'une durée de 4,616 millisecondes (ms). Cette enveloppe temporelle des signaux GSM permet donc la transmission de 8 (4,616 ms / 577 µs) périodes actives pour une même fréquence.

D'autre part, les téléphones modernes permettent l'émission et la réception de données multimédia. Ils permettent notamment la réception de signaux de télévision numérique, grâce à une bande de fréquences comprises entre 470 et 700 MHz, appelée DVBH (Diffusion de Vidéo Numérique Mobile ou « Digital Video Broadcasting Handheld », selon la terminologie anglaise). Les signaux DVBH sont véhiculés par des bursts de plusieurs centaines de millisecondes.

Un problème dans le domaine de la téléphonie mobile moderne est la saturation des récepteurs de signaux radiotéléphoniques par des signaux dont les fréquences radio sont décalées par rapport à la bande de fréquences utilisée par ces récepteurs. Par exemple, lors de l'utilisation de la fonction de réception de signaux DVBH, les récepteurs DVBH peuvent être parasités par les signaux de la bande GSM. En effet, la puissance des signaux GSM et la proximité entre les bandes de fréquences des signaux GSM (en particulier les signaux GSM à 900 MHz) et la bande de fréquence DVBH font que le récepteur DVBH d'un téléphone mobile peut être étouffé ou désynchronisé par la présence de signaux GSM, rayonnés par l'émetteur GSM qui se trouve à proximité du récepteur DVBH. Ainsi, si un utilisateur est en train de recevoir des signaux DVBH sur son téléphone mobile, la réception d'un appel, par exemple de type GSM, sur ce téléphone ou sur celui d'un utilisateur à proximité risque de créer des interférences au niveau du récepteur DVBH. Dans ce contexte, il est intéressant d'éviter les perturbations de la réception des différents types de signaux entre eux et de proposer une solution permettant d'annuler sélectivement certains des signaux captés par les récepteurs radiotéléphoniques. Ainsi, la réception d'un appel ou la proximité d'un téléphone mobile en cours de communication ne perturberait pas les autres fonctions du téléphone mobile d'un utilisateur qui aurait alors le choix d'utiliser en même temps ces différentes fonctions.

Il est connu dans l'art antérieur des solutions consistant en des filtres passe bande (par exemple à haute atténuation hors bande), mais ceux-ci sont trop coûteux et volumineux pour être appliqués au filtrage des signaux GSM, afin d'améliorer de la réception des signaux DVBH dans les téléphones mobiles. Il est également connu dans l'art antérieur des solutions consistant en l'utilisation de réjecteurs d'harmoniques activés lors de l'utilisation des fonctions DVBH de téléphones mobiles, pour filtrer les signaux GSM. Ces réjecteurs d'harmoniques présentent les inconvénients d'être activés même en absence de signaux radiotéléphoniques interférents et de ne pas tenir de l'enveloppe temporelle de la transmission des signaux radiotéléphoniques interférents (i.e. au cours des périodes actives uniquement). De plus l'activation de ces réjecteurs d'harmoniques par commutation nécessite souvent l'intervention d'un processeur du téléphone mobile. Ces inconvénients résultent notamment en une consommation d'énergie trop élevée.

Le document US 4,584,580 propose une solution avec un dispositif qui intègre un filtre centré sur la bande de fréquences de codage d'un signal interférent dans un signal capté, toutefois un tel dispositif à l'inconvénient de venir altérer la réception du signal capté lorsque le signal interférent est absent.

La présente invention a pour but de pallier les inconvénients de l'art antérieur en proposant un dispositif améliorant notamment la réception de signaux électromagnétiques dont la bande de fréquences est proche de celle d'un signal interférent pendant les périodes inactives de ce signal interférent.

Ce but est atteint par un dispositif d'annulation d'au moins un signal électromagnétique, dans les gammes de fréquences des ondes décimétriques ou centimétriques, dit interférent, capté par un module de transmission, dit récepteur, de signaux électromagnétiques travaillant sur une bande de fréquences proche de celle du signal interférent dont les fréquences de codage sont transmises de manière séquencée selon une enveloppe temporelle constituée de périodes, dites actives, pendant lesquelles ces fréquences sont transmises et de périodes, dites inactives, pendant lesquelles ces fréquences sont absentes, caractérisé en ce qu'il comporte un coupleur transmettant les signaux captés par le récepteur, d'une part, à au moins un filtre centré sur au moins une bande de fréquences de codage d'un signal interférent et, d'autre part, à au moins un module de détection comportant un filtre d'extraction d'un signal représentatif de l'enveloppe du signal interférent pour commander un commutateur qui commute à la masse le filtre centré sur la bande de fréquences du signal interférent, pendant chacune des périodes actives du signal interférent, afin de supprimer les fréquences de codage du signal interférent présentes dans les signaux captés par le récepteur.

Selon une autre particularité, le module de détection comporte, d'une part, au moins un filtre qui détecte l'enveloppe du signal interférent dans les signaux captés par le récepteur et, d'autre part, au moins un module de mise en forme qui génère le signal représentatif de l'enveloppe du signal interférent transmis au commutateur en fournissant le courant suffisant.

Selon une autre particularité, le module de détection est ajustable sur différents types d'enveloppes temporelles de signaux électromagnétiques.

Selon une autre particularité, le filtre est centré sur la bande de fréquences de codage d'un signal électromagnétique compatible avec la norme GSM.

Selon une autre particularité, le filtre est centré sur la bande de fréquences de codage d'un signal électromagnétique compatible avec la norme DCS.

Selon une autre particularité, le filtre est centré sur la bande de fréquences de codage d'un signal électromagnétique compatible avec la norme PCS.

Selon une autre particularité, le filtre est accordable sur les bandes de fréquences de codage de différents types de signaux électromagnétiques.

Selon une autre particularité, le commutateur présente une forte impédance en dehors des périodes actives, de façon à ce que le dispositif ne perturbe pas le fonctionnement du récepteur.

Selon une autre particularité, le commutateur est une diode PIN.

Selon une autre particularité, le filtre est un résonateur LC.

Selon une autre particularité, le filtre du module de détection comporte une diode SCHOTTKY et un filtre passe bas.

Un autre but de la présente invention est de proposer un terminal communicant qui permette de pallier certains inconvénients de l'art antérieur en annulant des signaux électromagnétique capté par un récepteur de ce terminal.

Ce but est atteint par un terminal communicant comportant au moins un récepteur de signaux électromagnétiques dont les fréquences de codage se trouvent dans une gamme de fréquences des ondes décimétriques ou centimétriques, caractérisé en ce qu'il comporte au moins un dispositif selon l'invention.

Selon une autre particularité, le terminal consiste en un téléphone mobile.

Selon une autre particularité, le récepteur de signaux électromagnétiques est également un émetteur de signaux électromagnétiques.

Selon une autre particularité, le récepteur de signaux électromagnétiques est un récepteur compatible avec la norme DVBH.

Un autre but de la présente invention est de proposer un terminal communicant qui permette de pallier certains inconvénients de l'art antérieur en annulant des signaux électromagnétiques correspondants à un standard d'un premier module de transmission de ce terminal et capté par un second module de transmission de ce terminal.

Ce but est atteint par un terminal communicant comportant au moins deux modules de transmission de signaux électromagnétiques correspondants à deux standards différents et dont les fréquences de codage se trouvent dans une gamme de fréquences des ondes décimétriques ou centimétriques et sont suffisamment proches pour qu'au moins un signal, dit interférent, correspondant à l'un de ces deux standards soit capté par le module de transmission destiné aux signaux électromagnétiques de l'autre standard, les fréquences de codage de ce signal interférent étant transmises de manière séquencée selon une enveloppe temporelle constituée de périodes, dites actives, pendant lesquelles ces fréquences sont transmises et de périodes, dites inactives, pendant lesquelles ces fréquences sont absentes, caractérisé en ce qu'il comporte au moins un dispositif selon l'invention.

Selon une autre particularité, les modules de transmission sont des modules de réception et/ou d'émission de signaux électromagnétiques.

Selon une autre particularité, le terminal comporte deux dispositifs d'annulation des signaux accordés chacun sur les signaux de l'un des modules de transmission du terminal.

Selon une autre particularité, le terminal consiste en un téléphone mobile.

Selon une autre particularité, au moins un des modules de transmission de signaux électromagnétiques est un module de transmission de signaux multimédia.

Selon une autre particularité, le récepteur de signaux électromagnétiques est un récepteur compatible avec la norme DVBH.

D'autres particularités et avantages de la présente invention apparaîtront plus clairement à la lecture de la description ci-après, faite en référence aux dessins annexés, dans lesquels :
- la figure 1 représente un schéma du dispositif selon un mode de réalisation de l'invention,
- la figure 2 représente un schéma du terminal communicant selon un mode de réalisation de l'invention.

L'invention concerne un terminal (10) communicant et un dispositif (1) d'annulation d'au moins un signal électromagnétique dont les fréquences de codage sont transmises de manière séquencée selon une enveloppe temporelle constituée de périodes, dites actives, pendant lesquelles ces fréquences sont transmises et de périodes, dites inactives, pendant lesquelles ces fréquences sont absentes. Bien que l'exemple de la perturbation de la réception des signaux de télévision numérique de type DVBH par des signaux de type GSM reçus en même temps par le téléphone soit donnée comme exemple d'application de la présente invention, celle-ci peut être appliquée à d'autres types de signaux électromagnétiques dont les fréquences sont transmises comme mentionné ci-dessus. L'invention concerne particulièrement les téléphones mobiles capables de fonctionner au moins selon deux standards simultanément, avec différents signaux véhiculés par des bandes de fréquences différentes. Des terminaux communicants dont le récepteur électromagnétique ne fonctionne qu'avec des signaux d'une seule bande de fréquence pourraient rester dans l'esprit de la présente invention et bénéficier des avantages qu'elle procure. De même, un terminal communicant ne consistant pas forcément en un téléphone mobile et uniquement dédié à la réception de signaux électromagnétiques ne s'éloignerait pas de l'esprit de l'invention.

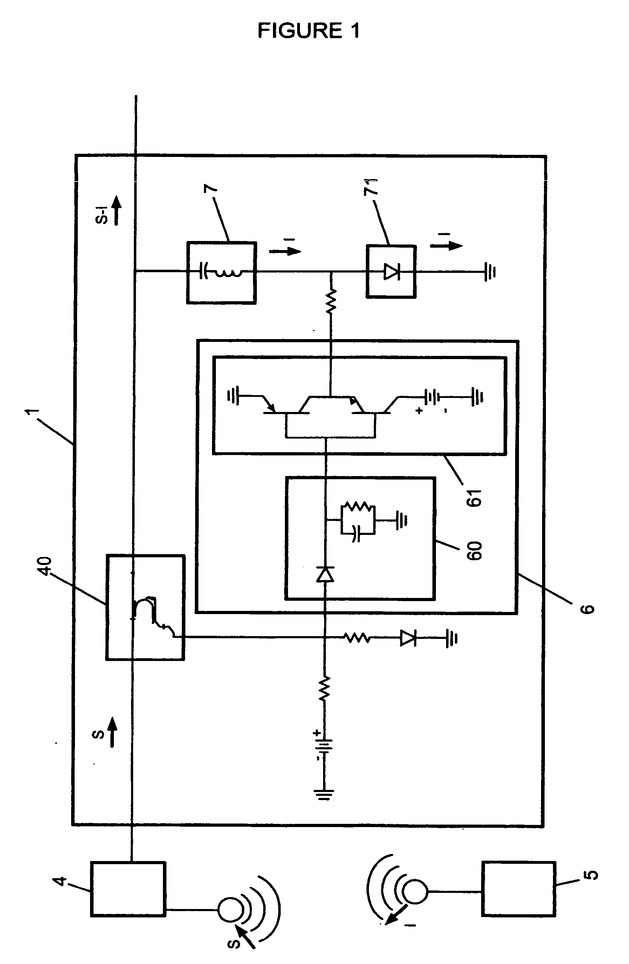

Le principe de l'invention va maintenant être décrit en référence à la figure 1 montrant un mode de réalisation du dispositif (1) selon l'invention permettant de supprimer des signaux (I), dits interférents, correspondant à un standard de radiotéléphonie et présents parmi les signaux (S) captés par un récepteur (4) radiotéléphonique fonctionnant selon un autre standard dont les bandes de fréquences sont suffisamment proches ce celles des signaux (I) interférents pour que ces derniers perturbent le fonctionnement du récepteur (4). Le dispositif (1) comporte un coupleur (40) transmettant, d'une part, les signaux (S) captés par le récepteur (4) à un filtre (7) centré sur au moins une bande de fréquences de codage du signal (I) interférent. Le filtre (7) pourra être un résonateur, par exemple LC comme représenté sur la figure 1. Ce filtre (7) peut être centré, par exemple, sur une des bandes de fréquences des normes GSM, DCS ou PCS, mais il peut également consister en un filtre (7) accordable sur les bandes de fréquences de codage de différents types de signaux (I) radiotéléphoniques.

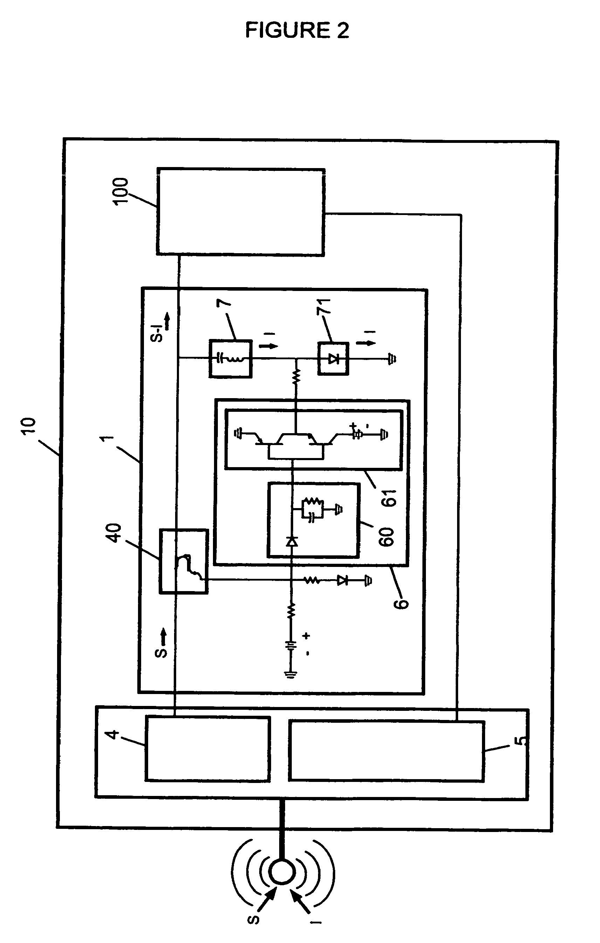

Les signaux (S) captés sont, d'autre part, transmis à un module (6) de détection qui en extrait l'enveloppe du signal (I) interférent, grâce à un filtre (60). Le signal sortant du filtre (60), représentatif de l'enveloppe du signal (I) interférent, est transmis à un module (6) de mise en forme des périodes actives du signal (I) interférent pour activer un commutateur (71) qui commute à la masse le filtre (7) centré sur les fréquences de codage du signal (I) interférent. Ainsi, les fréquences de codage du signal (I) interférent, présentes dans les signaux (S) captés par le récepteur (4), sont supprimées uniquement pendant les périodes actives du signal (I) interférent et le signal (S-I) sortant du dispositif et débarrassé des fréquences de codage du signal (I) interférent. Des moyens (100) de traitement du terminal (10) communicant, représenté sur la figure 2, pourront alors effectuer les opérations nécessaires sur ce signal (S-I) épuré pour convertir les informations qu'il contient en informations accessibles à l'utilisateur du terminal (10).

Le filtre (60) module (6) de détection représenté sur la figure 1 comporte une diode SCHOTTKY et un filtre passe bas qui résulteront en un signal filtré représentatif de l'enveloppe du signal (I) interférent mais avec une sortance qui n'est pas forcément suffisante pour faire commuter à la masse le commutateur (71). Ce signal filtré est donc corrigé par un module (61) de mise en forme qui génère le signal représentatif de l'enveloppe du signal (I) interférent à transmettre au commutateur (71) en fournissant le courant suffisant pour le faire commuter. Le commutateur (71) est une diode PIN présentant une forte impédance en dehors des périodes actives, de façon à ce que le dispositif ne perturbe pas le fonctionnement du récepteur (4) lors de la réception des signaux correspondant à son standard (DVBH, par exemple). Dans un mode de réalisation de l'invention, le module (6) de détection pourrait être ajustable sur différents types d'enveloppes temporelles de signaux radiotéléphoniques, par exemple en modifiant la bande de fréquence filtrée par le filtre (60).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif (1) d'annulation d'au moins un signal électromagnétique, dans les gammes de fréquences des ondes décimétriques ou centimétriques, dit interférent (I), capté par un module de transmission, dit récepteur (4), de signaux électromagnétiques travaillant sur une bande de fréquences proche de celle du signal (I) interférent dont les fréquences de codage sont transmises de manière séquencée selon une enveloppe temporelle constituée de périodes, dites actives, pendant lesquelles ces fréquences sont transmises et de périodes, dites inactives, pendant lesquelles ces fréquences sont absentes, le dispositif comportant un coupleur (40) transmettant les signaux (S) captés par le récepteur (4), d'une part, à au moins un filtre (7) centré sur au moins une bande de fréquences de codage d'un signal (I) interférent et, d'autre part, à au moins un module (6) de détection comportant un filtre d'extraction d'un signal représentatif de l'enveloppe du signal (I) interférent **caractérisé en ce que** le signal (I) interférent vient commander un commutateur (71) qui commute à la masse le filtre (7) centré sur la bande de fréquences du signal (I) interférent, pendant chacune des périodes actives du signal (I) interférent, afin de supprimer les fréquences de codage du signal (I) interférent présentes dans les signaux (S) captés par le récepteur (4).

2. Dispositif selon la revendication 1, **caractérisé en ce que** le module (6) de détection comporte, d'une part, au moins un filtre (60) qui détecte l'enveloppe du signal (I) interférent dans les signaux (S) captés par le récepteur (4) et, d'autre part, au moins un module (61) de mise en forme qui génère le signal représentatif de l'enveloppe du signal (I) interférent transmis au commutateur (71) en fournissant le courant suffisant.

3. Dispositif selon une des revendications 1 et 2, **caractérisé en ce que** le module (6) de détection est ajustable sur différents types d'enveloppes temporelles de signaux électromagnétiques.

4. Dispositif selon une des revendications 1 à 3, **caractérisé en ce que** le filtre (7) est centré sur la bande de fréquences de codage d'un signal (I) électromagnétique compatible avec la norme GSM.

5. Dispositif selon une des revendications 1 à 3, **caractérisé en ce que** le filtre (7) est centré sur la bande de fréquences de codage d'un signal (I) électromagnétique compatible avec la norme DCS.

6. Dispositif selon une des revendications 1 à 3, **caractérisé en ce que** le filtre (7) est centré sur la bande de fréquences de codage d'un signal (I) électromagnétique compatible avec la norme PCS.

7. Dispositif selon une des revendications 1 à 3, **caractérisé en ce que** le filtre (7) est accordable sur les bandes de fréquences de codage de différents types de signaux (I) électromagnétiques.

8. Dispositif selon une des revendications 1 à 7, **caractérisé en ce que** le commutateur (71) présente une forte impédance en dehors des périodes actives, de façon à ce que le dispositif ne perturbe pas le fonctionnement du récepteur (4).

9. Dispositif selon une des revendications 1 à 8, **caractérisé en ce que** le commutateur (71) est une diode PIN.

10. Dispositif selon une des revendications 1 à 9, **caractérisé en ce que** le filtre (7) est un résonateur LC.

11. Dispositif selon une des revendications 2 à 10, **caractérisé en ce que** le filtre (60) du module (6) de détection comporte une diode SCHOTTKY et un filtre passe bas.

12. Terminal (10) communicant comportant au moins un récepteur (4) de signaux électromagnétiques dont les fréquences de codage se trouvent dans une gamme de fréquences des ondes décimétriques ou centimétriques, **caractérisé en ce qu'**il comporte au moins un dispositif (1) selon une des revendications 1 à 11.

13. Terminal selon la revendication 13, **caractérisé en ce qu'**il consiste en un téléphone mobile.

14. Terminal selon une des revendications 12 à 14, **caractérisé en ce que** le récepteur (4) de signaux électromagnétiques est également un émetteur de signaux électromagnétiques.

15. Terminal selon une des revendications 12 à 15, **caractérisé en ce que** le récepteur (4) de signaux électromagnétiques est un récepteur compatible avec la norme DVBH.

16. Terminal (10) communicant comportant au moins deux modules (4 et 5) de transmission de signaux électromagnétiques correspondants à deux standards différents et dont les fréquences de codage se trouvent dans une gamme de fréquences des ondes décimétriques ou centimétriques et sont suffisamment proches pour qu'au moins un signal, dit interférent (I), correspondant à l'un de ces deux standards soit capté par le module (4) de transmission destiné aux signaux électromagnétiques de l'autre standard, les fréquences de codage de ce signal interférent (I) étant transmises de manière séquencée selon une enveloppe temporelle constituée de périodes, dites actives, pendant lesquelles ces fréquences sont transmises et de périodes, dites inactives, pendant lesquelles ces fréquences sont absentes, **caractérisé en ce qu'**il comporte au moins un dispositif (1) selon une des revendications 1 à 11.

17. Terminal (10) communicant selon la revendication 17, **caractérisé en ce que** les modules (4 et 5) de transmission sont des modules de réception et/ou d'émission de signaux électromagnétiques.

18. Terminal (10) communicant selon une des revendications 17 et 18, **caractérisé en ce qu'**il comporte deux dispositifs (1) d'annulation des signaux accordés chacun sur les signaux de l'un des modules (4 et 5) de transmission du terminal (10).

19. Terminal selon la revendication 13, **caractérisé en ce qu'**il consiste en un téléphone mobile.

20. Terminal (10) communicant selon une des revendications 17 à 19, **caractérisé en ce qu'**au moins un des modules (4 et 5) de transmission de signaux électromagnétiques est un module de transmission de signaux multimédia.

21. Terminal selon la revendication 12 à 15, **caractérisé en ce que** le récepteur (4) de signaux électromagnétiques est un récepteur compatible avec la norme DVBH.

## Claims

1. Device (1) for cancelling at least one electromagnetic signal, in the decimetric- or centimetric-wave frequency bands, said to be interfering (I), collected by a module, known as a receiver (4), for transmitting electromagnetic signals working on a frequency band close to that of the interfering signal (I), the coding frequencies of which are transmitted in a sequenced manner according to a temporal envelope constituted by periods, said to be active, during which these frequencies are transmitted and by periods, said to be inactive, during which these frequencies are absent, the device comprising a coupler (40) transmitting the signals (S) collected by the receiver (4), on the one hand, to at least one filter (7) centred on at least one coding frequency band of an interfering signal (I) and, on the other hand, to at least one detection module (6) comprising a filter for extracting a signal representing the envelope of the interfering signal (I) **characterised in that** the interfering signal (I) commands a switch (71) that switches to earth the filter (7) centred on the frequency band of the interfering signal (I), during each of the active periods of the interfering signal (I), so as to eliminate the coding frequencies of the interfering signal (I) present in the signals (S) collected by the receiver (4).

2. Device according to Claim 1, **characterised in that** the detection module (6) comprises, on the one hand, at least one filter (60) that detects the envelope of the interfering signal (I) in the signals (S) collected by the receiver (4) and, on the other hand, at least one formatting module (61) that generates the signal representing the envelope of the interfering signal (I) transmitted to the switch (71) while providing sufficient current.

3. Device according to one of Claims 1 and 2, **characterised in that** the detection module (6) is adjustable over different types of temporal envelopes of electromagnetic signals.

4. Device according to one of Claims 1 to 3, **characterised in that** the filter (7) is centred on the coding frequency band of an electromagnetic signal (I) compatible with the GSM standard.

5. Device according to one of Claims 1 to 3, **characterised in that** the filter (7) is centred on the coding frequency band of an electromagnetic signal (I) compatible with the DCS standard.

6. Device according to one of Claims 1 to 3, **characterised in that** the filter (7) is centred on the coding frequency band of an electromagnetic signal (I) compatible with the PCS standard.

7. Device according to one of Claims 1 to 3, **characterised in that** the filter (7) is tunable to the coding frequency bands of different types of electromagnetic signals (I).

8. Device according to one of Claims 1 to 7, **characterised in that** the switch (71) has high impedance outside the active periods, so that the device does not disturb the operation of the receiver (4).

9. Device according to one of Claims 1 to 8, **characterised in that** the switch (71) is a PIN diode.

10. Device according to one of Claims 1 to 9, **characterised in that** the filter (7) is an LC resonator.

11. Device according to one of Claims 2 to 10, **characterised in that** the filter (60) of the detection module (6) comprises a Schottky diode and a low-pass filter.

12. Communicating terminal (10) comprising at least one electromagnetic signal receiver (4), the coding frequencies of which are in a decimetric-or centimetric-wave frequency band, **characterised in that** it comprises at least one device (1) according to one of Claims 1 to 11.

13. Terminal according to Claim 13, **characterised in that** it consists of a mobile telephone.

14. Terminal according to one of Claims 12 to 14, **characterised in that** the electromagnetic signal receiver (4) is also an electromagnetic signal transmitter.

15. Terminal according to one of Claims 12 to 15, **characterised in that** the electromagnetic signal receiver (4) is a receiver compatible with the DVBH standard.

16. Communicating terminal (10) comprising at least two modules (4 and 5) for transmitting electromagnetic signals corresponding to two different standards and the coding frequencies of which are in a decimetric- or centimetric-wave frequency band and are close enough for at least one signal, said to be interfering (I), corresponding to one of these two standards, to be collected by the transmission module (4) intended for the electromagnetic signals of the other standard, the coding frequencies of this interfering signal (I) being transmitted in a sequenced manner according to a temporal envelope constituted by periods, said to be active, during which these frequencies are transmitted, and by periods, said to be inactive, during which these frequencies are absent, **characterised in that** it comprises at least one device (1) according to one of Claims 1 to 11.

17. Communicating terminal (10) according to Claim 17, **characterised in that** the transmission modules (4 and 5) are modules for receiving and/or sending electromagnetic signals.

18. Communicating terminal (10) according to one of Claims 17 and 18, **characterised in that** it comprises two devices (1) for cancelling signals each tuned to the signals of one of the transmission modules (4 and 5) of the terminal (10).

19. Terminal according to Claim 13, **characterised in that** it consists of a mobile telephone.

20. Communicating terminal (10) according to one of Claims 17 to 19, **characterised in that** at least one of the modules (4 and 5) for transmitting electromagnetic signals is a multi-media signal transmission module.

21. Terminal according to Claim 12 to 15, **characterised in that** the electromagnetic signal receiver (4) is a receiver compatible with the DVBH standard.

## Patentansprüche

1. Vorrichtung (1) zur Unterdrückung mindestens eines elektromagnetischen Signals im Frequenzbereich der Dezimeter- oder Zentimeterwellen, Störsignal (I) genannt, das von einem Übertragungsmodul elektromagnetischer Signale, Empfänger (4) genannt, empfangen wird, das in einem Frequenzband nahe dem des Störsignals (I) arbeitet, dessen Codierungsfrequenzen sequentiell mit einer Zeithüllkurve übertragen werden, die aus aktiv genannten Perioden besteht, während derer diese Frequenzen übertragen werden, und inaktiv genannten, während derer diese Frequenzen fehlen, wobei die Vorrichtung über einen Koppler (40) verfügt, der die Signale (S) überträgt, die vom Empfänger (4) empfangen werden, einerseits mit mindestens einem Filter (7), der um mindestens ein Codierungsfrequenzband eines Störsignals (I) zentriert ist, und andererseits mit mindestens einem Demodulationsmodul (6), das einen Filter zur Ableitung eines Signals aufweist, das die Hüllkurve des Störsignals (I) darstellt, **dadurch gekennzeichnet, dass** das Störsignal (I) einen Schalter (71) steuert, der den um das Frequenzband des Störsignals (I) zentrierten Filter (7) während jeder der aktiven Perioden des Störsignals (I) an Masse anlegt, um die Codierungsfrequenzen des Störsignals (I) zu unterdrücken, die in den Signalen (S) anwesend sind, die der Empfänger (4) empfängt.

2. Vorrichtung nach Patentanspruch 1, **dadurch gekennzeichnet, dass** das Demodulationsmodul (6) einerseits mindestens einen Filter (60) aufweist, der die Hüllkurve des Störsignals (I) im vom Empfänger (4) empfangenen Signal (S) demoduliert und andererseits mindestens ein Formungsmodul (61), das das Signal erzeugt, das der Hüllkurve des Störsignals (I) entspricht und das mit der erforderlichen Stromstärke an den Schalter (71) übermittelt wird.

3. Vorrichtung nach einem der Patentansprüche 1 und 2, **dadurch gekennzeichnet, dass** das Demodulationsmodul (6) auf verschiedene Arten von Zeithüllkurven elektromagnetischer Signale einstellbar ist.

4. Vorrichtung nach einem der Patentansprüche 1 bis 3, **dadurch gekennzeichnet, dass** der Filter (7) um das Codierungsfrequenzband eines elektromagnetischen Signals (I) zentriert ist, das mit der GSM-Norm kompatibel ist.

5. Vorrichtung nach einem der Patentansprüche 1 bis 3, **dadurch gekennzeichnet, dass** der Filter (7) um das Codierungsfrequenzband eines elektromagnetischen Signals (I) zentriert ist, das mit der DCS-Norm kompatibel ist.

6. Vorrichtung nach einem der Patentansprüche 1 bis 3, **dadurch gekennzeichnet, dass** der Filter (7) um das Codierungsfrequenzband eines elektromagnetischen Signals (I) zentriert ist, das mit der PCS-Norm kompatibel ist.

7. Vorrichtung nach einem der Patentansprüche 1 bis 3, **dadurch gekennzeichnet, dass** der Filter (7) auf die Codierungsfrequenzbänder verschiedener Arten elektromagnetischer Signale (I) abstimmbar ist.

8. Vorrichtung nach einem der Patentansprüche 1 bis 7, **dadurch gekennzeichnet, dass** der Schalter (71) außerhalb der aktiven Perioden eine starke Impedanz aufweist, derart, dass die Vorrichtung nicht die Arbeit des Empfängers (4) stört.

9. Vorrichtung nach einem der Patentansprüche 1 bis 8, **dadurch gekennzeichnet, dass** der Schalter (71) eine PIN-Diode ist.

10. Vorrichtung nach einem der Patentansprüche 1 bis 9, **dadurch gekennzeichnet, dass** der Filter (7) ein LC-Resonator ist.

11. Vorrichtung nach einem der Patentansprüche 2 bis 10, **dadurch gekennzeichnet, dass** der Filter (60) des Demodulationsmoduls (6) eine SCHOTTKY-Diode und einen Tiefpassfilter umfasst.

12. Fernmeldeendgerät (10), mindestens einen Empfänger elektromagnetischer Signale (4) umfassend, deren Codierungsfrequenzen sich in einem Frequenzbereich der Dezimeter- oder Zentimeterwellen befinden, **dadurch gekennzeichnet, dass** es mindestens eine Vorrichtung (1) nach einem der Patentansprüche 1 bis 11 umfasst.

13. Endgerät nach Patentanspruch 12, **dadurch gekennzeichnet, dass** es ein Mobiltelephon ist.

14. Endgerät nach einem der Patentansprüche 12 bis 13, **dadurch gekennzeichnet, dass** der Empfänger elektromagnetischer Signale (4) ebenfalls ein Sender elektromagnetischer Signale ist.

15. Endgerät nach einem der Patentansprüche 12 bis 14, **dadurch gekennzeichnet, dass** der Empfänger elektromagnetischer Signale (4) ein mit der DVBH-Norm kompatibler Empfänger ist.

16. Fernmeldeendgerät (10), mindestens zwei Übertragungsmodule elektromagnetischer Signale (4 und 5) umfassend, die zwei verschiedenen Normen entsprechen und deren Codierungsfrequenzen sich in einem Frequenzbereich der Dezimeter- oder Zentimeterwellen befinden und ausreichend nahe liegen, damit mindestens ein Signal, das sogenannte Störsignal (I), das einer dieser beiden Normen entspricht, vom Übertragungsmodul (4) empfangen wird, das für die elektromagnetischen Signale der anderen Norm bestimmt ist, wobei die Codierungsfrequenzen dieses Störsignals (I) sequentiell entsprechend einer Zeithüllkurve gesendet werden, die aus sogenannten aktiven Perioden besteht, während derer diese Frequenzen gesendet werden, und aus sogenannten inaktiven, während derer diese Frequenzen abwesend sind, **dadurch gekennzeichnet, dass** es mindestens eine Vorrichtung (1) nach einem der Patentansprüche 1 bis 11 umfasst.

17. Fernmeldeendgerät (10) nach Patentanspruch 16, **dadurch gekennzeichnet, dass** die Übertragungsmodule (4 und 5) Module zum Empfang und/oder zum Senden elektromagnetischer Signale sind.

18. Fernmeldeendgerät (10) nach einem der Patentansprüche 16 und 17, **dadurch gekennzeichnet, dass** es zwei Vorrichtungen (1) zur Unterdrückung von Signalen aufweist, die jeweils auf die Signale eines der Übertragungsmodule (4 und 5) des Endgerätes (10) abgestimmt sind.

19. Endgerät nach Patentanspruch 13, **dadurch gekennzeichnet, dass** es ein Mobiltelephon ist.

20. Fernmeldeendgerät (10) nach einem der Patentansprüche 17 bis 19, **dadurch gekennzeichnet, dass** mindestens eins der Module (4 und 5) zur Übertragung elektromagnetischer Signale ein Modul zur Übertragung von Multimedia-Signalen ist.

21. Endgerät nach einem der Patentansprüche 12 bis 15, **dadurch gekennzeichnet, dass** der Empfänger elektromagnetischer Signale (4) ein mit der DVBH-Norm kompatibler Empfänger ist.
